# EUROPEAN PATENT SPECIFICATION

(11) **EP 1 395 126 B1**
(45) Date of publication and mention of the grant of the patent: **13.04.2005**
(21) Application number: 02741529.8
(22) Date of filing: 13.06.2002
(51) Int. Cl.: A23K 1/00, A23K 1/08, A23K 1/16, A23K 1/18, A23N 17/00, A23C 11/04

(54) **FAT-CONTAINING MILK SUBSTITUTE FOR YOUNG STOCK, METHOD FOR PREPARING THE FAT-CONTAINING MILK SUBSTITUTE AND DEVICE TO BE USED THEREWITH**
FETTHALTIGES MILCHERSATZPRODUKT FÜR JUNGVIEH, VERFAHREN ZUR DESSEN HERSTELLUNG UND VORRICHTUNG FÜR DIE VERWENDUNG
SUBSTITUT DU LAIT CONTENANT DE LA MATIERE GRASSE DESTINE AU JEUNE BETAIL, PROCEDE DE PREPARATION DE CE SUBSTITUT DU LAIT CONTENANT DE LA MATIERE GRASSE ET DISPOSITIF UTILISE AVEC CE PROCEDE

(30) Priority: 15.06.2001 NL 1018308
(43) Date of publication of application: 10.03.2004
(73) Proprietor: BVBA European Business Support N.V., Willemstad Curacao (AN)
(72) Inventor: HOOGENDIJK, Gerard, Pieter, NL-3445 EB Woerden (NL)
(74) Representative: Valkonet, Rutger
(86) International application number: PCT/NL2002/000387
(87) International publication number: WO 2002/102171

(56) References cited:
- EP-A- 0 927 522
- WO-A-98/03080
- FR-A- 2 302 049
- GB-A- 1 095 823
- GB-A- 2 232 573

## Description

The invention relates to a fat-containing milk substitute consisting of a particulate basic component which contains fat. The invention furthermore relates to a method for preparing a fat-containing milk substitute for young stock by mixing fat with the particles of the basic component of the milk substitute. More in particular, the invention relates to a method for preparing granulated milk substitutes, which milk substitute contains fat. Furthermore, the invention relates to a device for carrying out the method according to the invention.

Young stock, such as (feeding) calves, lambs and piglets, and poultry, such as (feeding) ducks, geese and laying hens are fed on high-energy and high-protein feedstuffs, in particular milk or milk substitutes. Such milk substitutes have a base of a powdery component which is mixed with water. The basic component comprises, among other substances, dairy produce and/or other vegetable or animal raw substances in powder form. The basic component may also contain other auxiliary substances, such as minerals and vitamin supplements. Furthermore, fats of vegetable and/or animal origin and/or fish are added to the milk substitute. Fats may in turn contain certain auxiliary substances. The aim in developing a milk substitute is to increase the fat content of the particulate basic component such as milk powder, dried whey, and vegetable substances from 15% to 50%.

Although it is possible to give powder particles a higher weight percentage of fat at the surface thereof than has been usual so far, such a higher fat content leads to digestive problems with the young stock or poultry. Consequently, the aim of the new products and the new process is to achieve a higher amount of fat on or in the powdery raw material than has been possible with the techniques that have been used so far, modifying the product in such a manner that a better absorption of the fat will take place.

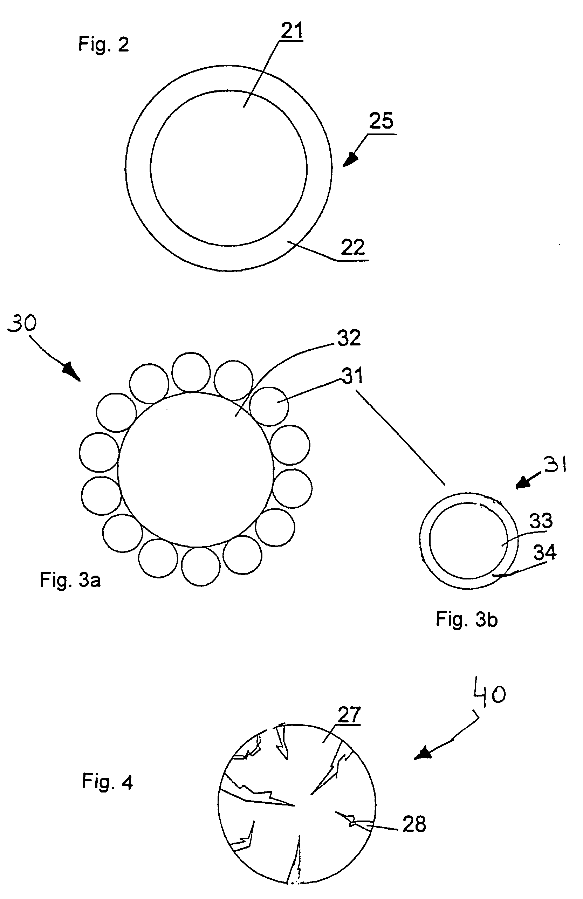

From practice it is known to coat a powder particle with a layer of fat by means of a rolling process, for example. In this way, a fat-containing powder particle as shown in Figure 2 is obtained, as will be discussed hereinafter. Furthermore it is known from practice to obtain a fat-containing powder by spray-drying or spray-cooling, as is shown in the Figures 3a and 3b that will be discussed hereinafter, wherein the fat particle is surrounded by powder particles, thus forming an agglomerate in which a fat particle is surrounded by a large number of powder particles and vice versa. Thus, a readily flowable product is obtained, which has this drawback, however, that it is difficult to digest for young stock or poultry, especially in the case of products having a fat content of more than 20%. These known fat-containing powdery products are improved by providing a product according to the invention.

The aim in developing new milk substitutes is to increase the fat content of the particulate basic component, such as milk powder, in particular to a fat content of more than 20 wt. %. As indicated above, it is possible to give particles of milk powder a higher weight percentage of fat at the surface thereof, but such a higher fat content at the surface leads to digestive problems with the young stock or poultry. The term young stock, when used hereinafter, is understood to include poultry as well.

Intensive research has led to the development of a new product and a new method, wherein it is possible for the fat to be introduced into the core of the particle in large measure, with a small amount of fat being present at the surface of the particle.

The present method for applying fat under reduced pressure to particles of a basic component of a milk substitute while mixing, comprising combining in a mixer a predetermined quantity of said particles with a predetermined quantity of a fat, is characterized in that said reduced pressure is applied to said particles prior to combining said particles with said fat. It has become apparent, using the method and the device according to the invention, to prepare a fat-containing milk substitute for young stock and (feeding) calves, which milk substitute contains the desired auxiliary substances, in particular fat, so that high percentages of fat and auxiliary substances (over 20 wt. %) can be administered to the young stock without this leading to problems as regards the ingestion of the feed by the young stock.

The fat-containing milk substitute according to the invention is characterized in that more than 90 wt. % of the fat has been introduced into the capillaries of the basic component, with less than 10 wt. % of the fat being present at the surface of the particles of the basic component.

Preferably, milk powder is used as the basic component. Also dried whey and starches can be used, and the basic component/fat weight ratio is higher than 1:1 and lower than 100:1. More in particular, the powder/fat weight ratio ranges between 1:0.5 and 1:0.1.

Preferably, more than 90 wt. % of the fat is introduced into the capillaries of the powder particle.

With the method according to the invention, the fat is mixed with the powder under a reduced pressure and at an elevated temperature. In particular, the reduced pressure is 0.2-0.7 bar and the elevated temperature is 25-60 °C.

In order to enable proper processing of the obtained fat-containing powder particles into a milk substitute at a later stage, it is preferred to obtain particles having a grain size of about 1.5-4 mm. To that end, the obtained particles are screened after the addition of the fat and subsequently stored at a reduced temperature, in particular a temperature of less than 8 °C. Prior to cooling, the screened particles are mixed with solid carbon dioxide, which will evaporate when air is blown in, thus cooling down the obtained grains to said reduced temperature.

The device according to the invention is characterized in that the outlet (11) of the mixer opens onto a screen (13), after which screen a milling cutter (15) is disposed for crushing the large chunks fine, after which milling cutter a flat screen/fluidising bed (18) provided with a cooling element for obtaining a cooled final product is disposed and will be described in more detail hereinafter with reference to Figure 1 of the appended drawing. The drawing also shows the known product in Figures 2, 3a and 3b; the product according to the invention is shown in Figure 4.

It is generally known to introduce auxiliary substances under the surface of the basic component of fish feed by means of oil when preparing particles of said fish feed, which is done by using a method which employs a reduced pressure. In this connection, reference is made to European patent application No 0 556 883.

The invention will be explained in more detail hereinafter in the following description, in which reference is made to the appended drawing, in which:

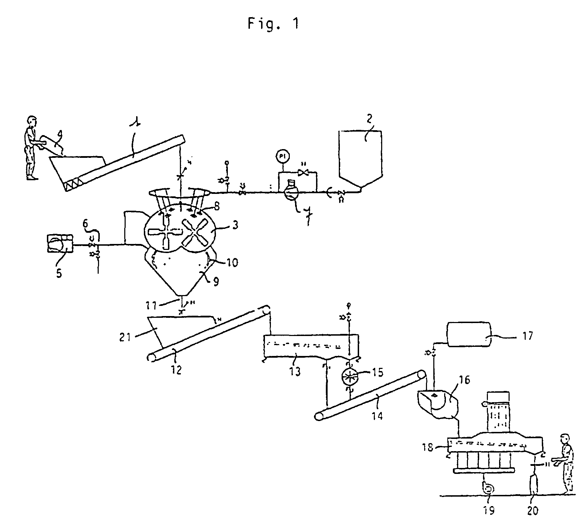

Figure 1 shows a device for carrying out the method for preparing a fat-containing milk substitute;
Figure 2 shows the fat-containing powder particle, which has been obtained by means of using cooling rolls;
Figures 3a and 3b show a fat-containing powdery product obtained by means of a spray-drying process; and
Figure 4 shows the fat-containing powder particle obtained in accordance with the invention.

A known fat-containing powder particle is shown at 25 in Figure 2, in which the powder particle 21 is surrounded by a fat envelope 22. This product has been obtained by means of using cooling rolls.

Figure 3 (consisting of Figures 3a and 3b) shows in Figure 3a the agglomerate 30, which in turn consists of fat particles 32 surrounded by powder particles 31. Said powder particles 31 are shown separately in Figure 3b, in which the powder particle 33 is surrounded by a thin skin 34 of fat.

In Figure 4, the product according to the invention is shown at 40, in which the powder particle 27 comprises capillaries 28 which will be filled with fat once the method according to the invention has been carried out. It will be apparent that the powder particle that is shown in Figures 2 and 3 also comprises capillaries, but said capillaries do not comprise fat, or only on the outside, whereas according to the invention the powder particle 27 comprises fat-filled capillaries 28. The milk substitute according to the invention that has thus been obtained is more easily digested by young stock and larger quantities of fat can be administered via powder without this leading to problems with the young stock as regards the ingestion of the substances to be administered in the fat and the fat itself. Consequently, the product according to the invention makes it possible to obtain a milk substitute for young stock by means of which in addition to milk powder, amongst other substances, also fat and auxiliary substances can be administered to the young cattle without this leading to digestive problems when relatively high percentages of fat (above 20 wt. %) are used.

Explaining the device to be used as shown in Figure 1 in more detail now, sacks 4 filled with a powder, preferably milk powder, are emptied into a screw conveyor 1. The powder has a loose, dusty structure and an ambient temperature, viz. about 15 °C. In this way, 100 kg of powder are added to the mixer 3 via the screw conveyor 1.

After the mixer has been filled with 100 kg of powder, the mixer 3 is closed and a sub-atmospheric pressure of about 0.5 bar is generated in the mixer via the vacuum pump 5. After the sub-atmospheric pressure has been reached within 1.5 minutes, the mixer is closed by means of the valve 6 and the operation of the vacuum pump 5 is stopped. Subsequently, the screw blades in the mixer 3 are rotated and fat from the storage container 2 is supplied to the powder, via the nozzles 8, by means of the pump 7. The temperature of the fat in the storage container 2 is 45 °C. Within one minute, 40 l of fat are added to the rotating powder, so that the final product will contain about 25% fat. After 40 l of hot fat have been supplied to the mixer, the nozzles 8 are blown through and the sub-atmospheric pressure is released and the mixer is stopped. Then the hatch 10 of the mixer is opened and the powder, to which fat has been added, runs into the lower bunker 9. Following that, the bottom valve 11 of the bunker is opened and the fat-containing powder falls into a receiving bin above the conveyor belt 12. The temperature of the product placed onto the conveyor belt 12 is about 26 °C. The granular product is transferred to a (Locker) screen 13 via the conveyor belt 12. Said screen comprises a screen frame with an upper cloth having a screen mesh of 8 mm. A small part (less than 10%) of the grains falls through the screen onto a discharge conveyor 14. The main part of the grains runs over the screening cloth, forming balls having a size of 2-3 cm. Said balls fall into a milling cutter 15, in which they are crushed fine. The substances being discharged from the screen 13 and from the milling cutter 15 (smaller than 8 mm) are transferred to the flow-through mixer 16 via the discharge conveyor 14, in which mixer the substances are mixed with solid flakes of carbon dioxide. To this end, liquid carbon dioxide from container 17 is converted into a spray, from which solid flakes are formed, which flakes are spread between chunks or balls of product. The product in the form of a mixture of flakes and balls lands on the flat screen 18. At the bottom side of the flat screen/fluidising bed 18 air is supplied via the fan 19, causing the CO₂ flakes to evaporate, so that heat is withdrawn from the product, as a result of which it will cool down to a temperature of about 5 °C. This cooled product is collected in sacks 20 or in a hopper (not shown), thus obtaining the final product. Upon analysis of the final product it appears that the final product consists of chunks of powder having a size of maximally 1 cm³ and containing about 25% fat. More than half of said fat has been introduced into the core of the chunk-shaped product, with less than half of the fat being present at the surface. This product makes it possible to obtain a milk substitute for young stock, by means of which not only powder but also fat and auxiliary substances can be administered to the young stock without this leading to digestive problems when large quantities of fat (about 45 wt. %) are used.

The device according to the invention consists of a mixer comprising a supply inlet for the basic component on the one hand and fat on the other hand, from which mixer the fat-containing basic component can be discharged. Said device is characterized in that the material supplied as the basic component is a milk substitute and in that the mixer comprises a vacuum pump.

Furthermore it is preferred to supply the product to be discharged from the mixer, via a screen and an apparatus for reducing chunks, to a second screen and to cool the final product before storage thereof. Preferably, the device according to the invention comprises a supply inlet for carbon dioxide in connection with said cooling.

## Claims

1. A method for applying fat under reduced pressure to particles of a basic component of a milk substitute while mixing, comprising combining in a mixer a predetermined quantity of said particles with a predetermined quantity of a fat, **characterized in that** said reduced pressure is applied to said particles prior to combining said particles with said fat.

2. A method according to claim 1, **characterized in that** during mixing said fat is added to the rotating particles.

3. A method according to any of the preceding claims, **characterized in that** said basic component is a powder.

4. A method according to claim 3, **characterized in that** said powder is selected from milk powder, dried whey, and vegetable substances.

5. A method according to any of the preceding claims, **characterized in that** the basic component/fat weight ratio ranges between 1:0.5 and 1:0.1.

6. A method according to any of the preceding claims, **characterized in that** the fat is mixed with the powder under a reduced pressure and at an elevated temperature.

7. A method according to claim 5, **characterized in that** the powder/fat weight ratio ranges between 1:0.5 and 1:0.1.

8. A method according to claim 6, **characterized in that** the reduced pressure is 0.2-0.7 bar.

9. A method according to claim 6, **characterized in that** the the elevated temperature is 25-60 °C.

10. A method according to any of the preceding claims, **characterized in that** the fat-containing particles are screened to a particle size of 0.5-4 mm.

11. A method according to claim 10, **characterized in that** the granulated particles are stored at a temperature of less than 8 °C.

12. A method according to claim 11, **characterized in that** said cooling takes place by mixing the fat-containing product with solid carbon dioxide and causing the carbon dioxide to evaporate by ventilating air passing said solid carbon dioxide.

13. A fat-containing milk substitute for young stock, such as calves, lambs, and piglets, and for poultry, consisting of a particulate basic component which contains fat, **characterized in that** more than 90 wt. % of the fat has been introduced into the capillaries of the basic component, with less than 10 wt. % of the fat being present at the surface of the particles of the basic component.

14. A fat-containing milk substitute according to claim 13, **characterized in that** said basic component is a powder.

15. A fat-containing milk substitute according to claim 14, **characterized in that** said powder is selected from milk powder, dried whey, and vegetable substances.

16. A device for carrying out the method according to claim 1-12, which device consists of a mixer comprising a supply inlet for basic component and fat and an outlet for the mixture of basic component and fat, wherein the basic component has been selected so that a milk substitute can be obtained therewith and wherein the mixer (3) comprises a vacuum pump (5), **characterized in that** the outlet (11) of the mixer opens onto a screen (13), after which screen a milling cutter (15) is disposed for crushing the large chunks fine, after which milling cutter a flat screen/fluidising bed (18) provided with a cooking element for obtaining a cooled final product is disposed.

17. A device according to claim 16, **characterized in that** a supply inlet for carbon dioxide is present between the screen (13) and the flat screen (18) so as to obtain a coolant.

18. A fat-containing milk substitute according to claims 13-15 for young stock, such as calves, lambs and piglets, and for poultry, obtained according to the methods according to any of claims 1-12.

19. Use of a fat-containing milk substitute according to any of claims 13-15, or claim 18, for young stock, such as calves, lambs and piglets, and for poultry.

## Patentansprüche

1. Ein Verfahren, um Fett unter reduziertem Druck zu Partikeln einer Basiskomponente eines Milchersatzes während des Mischens zuzugeben, umfassend, eine festgelegte Menge der genannten Partikel in einem Mischer mit einer festgelegten Menge eines Fettes zu kombinieren, **dadurch gekennzeichnet, dass** der genannte reduzierte Druck auf die genannten Partikel angewandt wird vor der Kombination genannter Partikel mit dem genannten Fett.

2. Ein Verfahren nach Anspruch 1, **dadurch gekennzeichnet, dass** während des Mischens das genannte Fett zu den rotierenden Partikeln zugefügt wird.

3. Ein Verfahren nach einem beliebigen der vorangehenden Ansprüche, **dadurch gekennzeichnet, dass** die genannte Basiskomponente ein Pulver ist.

4. Ein Verfahren nach Anspruch 3, **dadurch gekennzeichnet, dass** das genannte Pulver aus Milchpulver, getrockneter Molke oder pflanzlichen Substanzen ausgewählt ist.

5. Ein Verfahren nach einem beliebigen der vorangehenden Ansprüche, **dadurch gekennzeichnet, dass** das Gewichtsverhältnis Basiskomponente/Fett zwischen 1:0,5 und 1:0,1 liegt.

6. Ein Verfahren nach einem beliebigen der vorangehenden Ansprüche, **dadurch gekennzeichnet, dass** das Fett mit dem Pulver unter reduziertem Druck und bei erhöhter Temperatur gemischt wird.

7. Ein Verfahren nach Anspruch 5, **dadurch gekennzeichnet, dass** das Gewichtsverhältnis Pulver/Fett zwischen 1:0,5 und 1:0,1 liegt.

8. Ein Verfahren nach Anspruch 6, **dadurch gekennzeichnet, dass** der reduzierte Druck 0,2-0,7 bar beträgt.

9. Ein Verfahren nach Anspruch 6, **dadurch gekennzeichnet, dass** die erhöhte Temperatur 25-60°C beträgt.

10. Ein Verfahren nach einem beliebigen der vorangehenden Ansprüche, **dadurch gekennzeichnet, dass** die fetthaltigen Partikel zu einer Partikelgröße von 0,5-4 mm gesiebt werden.

11. Ein Verfahren nach Anspruch 10, **dadurch gekennzeichnet, dass** die granulierten Partikel bei einer Temperatur von weniger als 8°C gelagert werden.

12. Ein Verfahren nach Anspruch 11, **dadurch gekennzeichnet, dass** die genannte Kühlung durch Mischen des fetthaltigen Produktes mit festem Kohlendioxid stattfindet und die Evaporation des Kohlendioxids durch belüften mit luft, welche das genannte Kohlendioxid durchströmt, bewirkt wird.

13. Ein fetthaltiger Milchersatz für junges Vieh, wie Kälber, Lämmer und Ferkel, und für Geflügel, bestehend aus einer partikelförmigen Basiskomponente, welche Fett enthält, **dadurch gekennzeichnet, dass** mehr als 90 Gew.-% des Fettes in die Kapillaren der Basiskomponente eingeführt wurden, wobei sich weniger als 10 Gew.-% des Fettes auf der Oberfläche der Partikel der Basiskomponente befinden.

14. Ein fetthaltiger Milchersatz nach Anspruch 13, **dadurch gekennzeichnet, dass** die genannte Basiskomponente ein Pulver ist.

15. Ein fetthaltiger Milchersatz nach Anspruch 14, **dadurch gekennzeichnet, dass** das genannte Pulver aus Milchpulver, getrockneter Molke oder pflanzlichen Substanzen ausgewählt ist.

16. Eine Vorrichtung zur Durchführung des Verfahrens nach den Ansprüchen 1-12, welche Vorrichtung aus einem Mischer, bestehend aus einem Versorgungseinlass für Basiskomponente und Fett und einem Auslass für die Mischung aus Basiskomponente und Fett, besteht, wobei die Basiskomponente so ausgewählt wurde, dass ein Milchersatz damit erhalten werden kann und wobei der Mischer (3) eine Vakuumpumpe (5) enthält, **dadurch gekennzeichnet, dass** der Auslass (11) des Mischers sich zu einem Sieb (13) hin öffnet, nach welchem Sieb ein Fräser (15) angeordnet ist, um die großen Stücke fein zu brechen, nach welchem Fräser ein Flachsortierer/Wirbelbett (18), ausgestattet mit einem Kühlelement, um ein gekühltes Endprodukt zu erhalten, angeordnet ist.

17. Eine Vorrichtung nach Anspruch 16, **dadurch gekennzeichnet, dass** ein Versorgungseinlass für Kohlendioxid vorhanden ist zwischen dem Sieb (13) und dem Flachsortierer (18), um ein Kühlmittel zu erhalten.

18. Ein fetthaltiger Milchersatz nach den Ansprüchen 13-15 für junges Vieh, wie Kälber, Lämmer und Ferkel, und für Geflügel, erhalten nach den Verfahren nach einem beliebigen der Ansprüche 1-12.

19. Die Verwendung eines fetthaltigen Milchersatzes nach einem beliebigen der Ansprüche 13-15, oder Anspruch 18, für junges Vieh, wie Kälber, Lämmer und Ferkel, und für Geflügel.

## Revendications

1. Procédé pour l'application de matière grasse à des particules d'un composant basique d'un substitut du lait, sous pression réduite et par mélange, comprenant la combinaison dans un mélangeur d'une quantité prédéterminée desdites particules avec une quantité prédéterminée d'une matière grasse, **caractérisé en ce que** ladite pression réduite est appliquée auxdites particules avant la combinaison desdites particules avec ladite matière grasse.

2. Procédé selon la revendication 1, **caractérisé en ce que** ladite matière grasse est ajoutée aux particules en rotation pendant le mélange.

3. Procédé selon l'une quelconque des revendications précédentes, **caractérisé en ce que** ledit composant basique est une poudre.

4. Procédé selon la revendication 3, **caractérisé en ce que** ladite poudre est choisie parmi le lait en poudre, le lactosérum séché, et les substances végétales.

5. Procédé selon l'une quelconque des revendications précédentes, **caractérisé en ce que** le rapport massique composant basique / matière grasse est compris entre 1 : 0,5 et 1 : 0,1.

6. Procédé selon l'une quelconque des revendications précédentes, **caractérisé en ce que** la matière grasse est mélangée avec la poudre sous une pression réduite et à une température élevée.

7. Procédé selon la revendication 5, **caractérisé en ce que** le rapport massique poudre / matière grasse est compris entre 1 : 0,5 et 1 : 0,1.

8. Procédé selon la revendication 6, **caractérisé en ce que** la pression réduite est de 0,2 à 0,7 bars.

9. Procédé selon la revendication 6, **caractérisé en ce que** la température élevée est de 25 à 60 °C.

10. Procédé selon l'une quelconque des revendications précédentes, **caractérisé en ce que** les particules contenant de la matière grasse sont calibrées à une taille de particule de 0,5 à 4 mm.

11. Procédé selon la revendication 10, **caractérisé en ce que** les particules granulées sont stockées à une température inférieure à 8 °C.

12. Procédé selon la revendication 11, **caractérisé en ce que** ledit refroidissement se produit en mélangeant le produit contenant de la matière grasse avec du dioxyde de carbone solide et en provoquant l'évaporation du dioxyde de carbone par ventiler avec de l'air traversant ledit dioxyde de carbone solide.

13. Substitut du lait contenant de la matière grasse pour le jeune bétail, tel que les veaux, les agneaux, et les porcelets, et pour la volaille, composé d'un composant basique particulaire qui contient de la matière grasse, **caractérisé en ce que** plus de 90 % en poids de la matière grasse a été introduite dans les capillaires du composant basique, moins de 10 % en poids de la matière grasse étant présente à la surface des particules du composant basique.

14. Substitut du lait contenant de la matière grasse selon la revendication 13, **caractérisé en ce que** ledit composant basique est une poudre.

15. Substitut du lait contenant de la matière grasse selon la revendication 14, **caractérisé en ce que** ladite poudre est choisie parmi le lait en poudre, le lactosérum séché, et les substances végétales.

16. Dispositif pour la mise en oeuvre du procédé selon les revendications 1 à 12, lequel dispositif est composé d'un mélangeur comprenant une entrée d'alimentation pour le composant basique et la matière grasse, et une sortie pour le mélange du composant basique et de la matière grasse, dans lequel le composant basique a été choisi de sorte à ce qu'un substitut du lait puisse être obtenu avec celui-ci, et dans lequel le mélangeur (3) comprend une pompe à vide (5), **caractérisé en ce que** la sortie (11) du mélangeur s'ouvre sur un crible (13), après lequel crible est disposée une fraise (15) pour broyer les gros morceaux finement, après laquelle fraise est disposé un crible plat / lit fluidisé (18) pourvu d'un élément de refroidissement pour obtenir un produit final refroidi.

17. Dispositif selon la revendication 16, **caractérisé en ce qu'**une entrée d'alimentation pour le dioxyde de carbone est présente entre le crible (13) et le crible plat (18) de sorte à obtenir un agent réfrigérant.

18. Substitut du lait contenant de la matière grasse selon les revendications 13 à 15 pour le jeune bétail, tel que les veaux, les agneaux et les porcelets, et pour la volaille, obtenu selon les procédés selon l'une quelconque des revendications 1 à 12.

19. Utilisation d'un substitut du lait contenant de la matière grasse selon l'une quelconque des revendications 13 à 15, ou selon la revendication 18, pour le jeune bétail, tel que les veaux, les agneaux et les porcelets, et pour la volaille.
